# EUROPÄISCHE PATENTSCHRIFT

(11) **EP 3 999 248 B1**
(45) Veröffentlichungstag und Bekanntmachung des Hinweises auf die Patenterteilung: **26.07.2023**
(21) Anmeldenummer: 20739273.9
(22) Anmeldetag: 22.06.2020
(51) Int. Cl.: B05B 13/00

(54) **VERFAHREN UND VORRICHTUNG ZUM LACKIEREN**
METHOD AND DEVICE FOR PAINTING
MÉTHODE ET DISPOSITIF DE PEINTURE

(30) Priorität: 19.07.2019 DE 102019119613
(43) Veröffentlichungstag der Anmeldung: 25.05.2022
(73) Patentinhaber: Bayerische Motoren Werke Aktiengesellschaft, 80809 München (DE)
(72) Erfinder: ZWERENZ, Anja, 04567 Kitzscher (DE); ZEISSLER, Juliane, 80469 München (DE); WELKEN, Aubrey, 0042 Pretoria (ZA); ZIMMERMANN, Steffi, 80796 München (DE)
(86) Internationale Anmeldenummer: PCT/EP2020/067277
(87) Internationale Veröffentlichungsnummer: WO 2021/013449

(56) Entgegenhaltungen:
- EP-A1- 1 733 799
- DE-A1-102014 009 945
- DE-A1-102016 014 919
- US-A1- 2018 250 703

## Beschreibung

Die Erfindung betrifft ein Verfahren zum Lackieren eines Außenhautbauteils, welches insbesondere ein Karosserieteil, beispielsweise ein Fahrzeugdach, sein kann, eines Kraftfahrzeugs gemäß dem Oberbegriff des Patentanspruchs 1. Ferner betrifft die Erfindung eine Lackierstation für ein Außenhautbauteil eines Kraftfahrzeugs gemäß dem Oberbegriff des Patentanspruchs 10.

Die Lackierung eines Kraftfahrzeugs, insbesondere eines Personenkraftwagens, trägt maßgeblich zur Ästhetik des Kraftwagens bei und dient darüber hinaus beispielsweise auch dem Schutz vor Umwelteinflüssen. Die Lackierung kann sich beispielsweise aus den Lackflächen im Exterieur und darüber hinaus auch im Interieur zusammensetzten, wobei die Lackflächen in aller Regel Sichtflächen sind. Die Art und/oder Farbe beziehungsweise eine Anmutung der Lackfläche kann als Unterscheidungsmerkmal zwischen verschiedenen Kraftfahrzeugen genutzt werden. Ferner können, insbesondere großflächige, Exterieurflächen beziehungsweise Lackflächen die Funktionalität des Kraftfahrzeugs steigern. Darüber hinaus können auch die Differenzierungsmöglichkeiten für einen potentiellen Benutzer des Kraftfahrzeugs gesteigert werden, wodurch beispielsweise ein Alleinstellungsmerkmal des Kraftwagens besonders hervorgehoben werden kann. Siehe hierzu auch die DE102014009945.

Möglichkeiten ein Außenhautbauteil beziehungsweise eine Fahrzeugkarosserie zu lackieren sind aus dem Stand der Technik bereits bekannt. So zeigt die DE 602 12 523 T2 einen Fahrzeugkarosserie-Lackierprozess zur Lackierung einer Fahrzeugkarosserie, die einen Karosserie-Außenabschnitt, Motor- und Ladungs- oder Gepäckräume und einen Türrinnenabschnitt umfasst.

Ferner zeigt die EP 0 122 034 B1 ein Verfahren zum Beschichten von Autokarosserien, wobei ein elektrostatisches Sprühbeschichtungssystem verwendet wird, das verschiebbare, sich drehende Köpfe zum Zerstäuben von auf der Autokarosserie aufzutragender Farbe benutzt.

Schließlich zeigt die DE 10 2004 010 389 B4 ein Verfahren zum Nasslackieren von Fahrzeugkarosserien mit mindestens zwei Farblacken für einen zweifarbig lackierte Fahrzeugkarosserie.

Nachteilig bei dem genannten Stand der Technik ist zumindest, dass damit kein Farbverlauf, also ein Farbgradient, beispielsweise von einer ersten Farbe hin zu einer zweiten Farbe lackiert werden kann, wobei der Übergang von einer Farbe zur anderen Farbe kontinuierlich ausgebildet ist. Ein weiterer Nachteil ist die teilweise schlechte Integrierbarkeit in bestehende Fertigungsstraße bei der Kraftfahrzeugproduktion mit Transportsystemen.

Aufgabe der vorliegenden Erfindung ist es daher, ein Verfahren zum Lackieren eines Außenhautbauteils eines Kraftfahrzeugs sowie eine Lackierstation zum Lackieren des Außenhautbauteils bereitzustellen, mittels welchen eine einen Farbgradienten aufweisende Farbverlaufs-Mehrfarblackierung realisiert werden kann, wobei das Verfahren beziehungsweise die Lackierstation insbesondere in einer Produktionsstraße, an welcher eine Förderrichtung das Außenhautbauteil transportiert, integrierbar sind.

Diese Aufgabe wird erfindungsgemäß durch die Gegenstände der unabhängigen Patentansprüche gelöst. Vorteilhafte Ausführungen der Erfindung sind Gegenstand der abhängigen Patentansprüche und der Beschreibung.

Ein erster Aspekt der Erfindung betrifft ein erfindungsgemäßes Verfahren zum Lackieren eines Außenhautbauteils, welches insbesondere beispielsweise ein Karosserieteil, wie beispielsweise ein Fahrzeugdach sein kann, und beispielsweise an weiteren Komponenten einer Karosserie befestigt ist, eines Kraftfahrzeugs, insbesondere eines Personenkraftwagens. Bei dem Verfahren wird das Außenhautbauteil mittels einer Förderanlage entlang einer Förderrichtung, welche vorteilhafterweise im Wesentlichen senkrecht zur Längserstreckungsrichtung des Außenhautbauteils sein kann, durch eine Lackierstation, insbesondere kontinuierlich während des Lackierens, gefördert.

Die Lackierstation weist wenigstens zwei Lackierroboter, mit jeweils einem an einem Roboterarm gehaltenen Spritzwerkzeug, auf, durch welche bei dem Verfahren jeweils Lack auf einen Sichtbereich des Außenhautbauteils appliziert, insbesondere beispielsweise gesprüht, wird.

Somit kann das jeweilige Spritzwerkzeug insbesondere als Lackierglocke ausgebildet sein, durch welche Lack auf den Sichtbereich gesprüht beziehungsweise gespritzt werden kann. Mittels der Lackierglocke kann insbesondere ein elektrostatisch unterstütztes Lackierverfahren mit mechanischer Zerstäubung und elektrostatischer Deposition der Tropfen auf dem Sichtbereich durchgeführt werden. Das jeweilige Sprühwerkzeug wird auch Applikator genannt. Der jeweilige Roboterarm ist, insbesondere mechanisch, vorzugsweise entlang der drei Raumrichtungen bewegbar und befindet sich beispielsweise auf einem drehbaren Sockel und weist vorzugsweise wenigstens ein Ellenbogengelenk auf, wobei das Spritzwerkzeug an einem Handbereich angebracht ist. So kann das Spritzwerkzeug beispielsweise relativ zu einem Unterarmbereich des Roboterarms drehbar gelagert ausgebildet sein. So ist der jeweilige Roboterarm dazu ausgebildet, das Spritzwerkzeug derart relativ zu dem, sich insbesondere in einer Förderung entlang der Förderrichtung befindenden, Außenhautbauteil derart zu bewegen, das Lack auf dem Sichtbereich appliziert werden kann. Die Kombination aus Roboterarm und des an diesem gehaltenen Spritzwerkzeugs bildet zusammen den Lackierroboter.

Die Lackierstation ist beispielsweise ein Bereich einer Produktionsstraße beziehungsweise Fertigungsstraße und/oder einer Fertigungslinie, an welcher das Außenhautbauteil, vor oder nach dem Lackieren, montiert wird. Die Förderanlage, an welcher das Außenhautbauteil beispielweise an wenigstens einem weiteren Karosserieteil gehalten werden kann, kann beispielsweise als Fließband oder als Transportfahrzeug ausgebildet sein. Dabei kann der erste der wenigstens zwei Roboterarme (beziehungsweise Lackierroboter) beispielsweise in Förderrichtung auf einer Steuerbordseite relativ zum Außenhautbauteil und der zweite der wenigstens zwei Roboterarme in Förderrichtung auf der Backbordseite relativ zum Außenhautbauteil stehen, sodass das Außenhautbauteil mittels der Förderanlage beispielsweise zwischen dem ersten Roboterarm und dem zweiten Roboterarm hindurchgefördert werden kann.

Damit mittels des erfindungsgemäßen Verfahrens eine Mehrfarblackierung durchgeführt werden kann, welche insbesondere einen Farbverlauf von einer ersten Farbe zu wenigstens einer zweiten (oder einer weiteren) Farbe ermöglicht, ist es erfindungsgemäß vorgesehen, dass durch eine Steuerungseinrichtung die wenigstens zwei Lackierroboter so gesteuert werden, dass das erste Spritzwerkzeug des ersten der wenigstens zwei Lackierroboter einen ersten Lack einer ersten Farbe in einem ersten Teilbereich des Sichtbereichs und das zweite Spritzwerkzeug des zweiten der wenigstens zwei Lackierroboter einen zweiten Lack einer zweiten Farbe in einem zweiten Teilbereich des Sichtbereichs appliziert, wobei in einem Überlappungsbereich, innerhalb welchem der erste Teilbereich mit dem zweiten Teilbereich überlappt, der erster Lack über dem zweiten Lack appliziert wird und beim Applizieren des ersten Lacks in dem Überlappungsbereich die Menge des ersten Lacks senkrecht zu einer Lackierrichtung, welche insbesondere mit der Förderrichtung zusammenfällt, konstant gehalten wird und/oder entlang der Lackierrichtung reduziert wird, wodurch ein Farbgradient von der ersten Farbe zur zweiten Farbe in dem Überlappungsbereich gebildet wird.

Dabei kann das Außenhautbauteil vor dem erfindungsgemäßen Verfahren beispielsweise vorbehandelt sein, so kann wenigstens der Sichtbereich des Außenhautbauteils beispielsweise, insbesondere durch einen weiteren Lack, grundiert sein. Ferner kann das Außenhautbauteil, nachdem die jeweilige Farbe in dem jeweiligen Teilbereich des Sichtbereichs appliziert wurde, beispielsweise noch, insbesondere im Bereich des gesamten Sichtbereichs mit einem Klarlack versehen werden, wodurch beispielsweise insbesondere die Haltbarkeit der Mehrfarblackierung erhöht werden kann.

Mit anderen Worten dient das erfindungsgemäße Verfahren dem Lackieren eines, insbesondere als Karosserieteil ausgebildeten Außenhautbauteils eines Kraftfahrzeugs, bei welchem auf zumindest dem Sichtbereich beziehungsweise einer Sichtfläche, also ein Bereich der im fertig montierten Zustand des Kraftfahrzeugs von dem Außenhautbauteil zu sehen ist, mittels wenigstens zwei, insbesondere zumindest drehbar an jeweils einem, insbesondere beweglich ausgebildeten, Roboterarm gehaltenen Spritzwerkzeugen wenigstens ein Lack auf die Sichtfläche appliziert wird. Dabei geschieht das Applizieren des Lacks während das Karosserieteil an den Spritzwerkzeugen und den Roboterarmen entlang einer Förderrichtung, insbesondere durch die Förderanlage, vorbeigefördert wird und eine Steuerungseinrichtung beziehungsweise die Steuerungseinrichtung die Roboterarme und die Spritzwerkzeuge zum Applizieren des Lacks auf der Sichtfläche steuert.

Um nun den Farbverlauf von der ersten Farbe zur zweiten Farbe zu ermöglichen, wird nun beispielsweise mittels des zweiten Spritzwerkzeugs der zweite Lack mit der zweiten Farbe innerhalb des Sichtbereichs in dem zweiten Teilbereich, dessen erste Grenze und dessen zweite Grenze jeweils insbesondere senkrecht zur Förderrichtung verlaufen können, appliziert.

Durch die Steuerungseinrichtung werden ferner beispielsweise der erste Roboterarm und das erste Spritzwerkzeug derart gesteuert, dass der erste Lack mit der ersten Farbe auf dem Sichtbereich in dem ersten Teilbereich, von welchem wenigstens eine Grenze insbesondere ebenfalls senkrecht zur Förderrichtung verläuft und diese vorteilhafterweise in dem, insbesondere ersten, Überlappungsbereich liegt, appliziert. Zusätzlich oder alternativ können die Grenzen wenigstens eines der Teilbereiche auch senkrecht und/oder in beliebiger Richtung zur Förderrichtung verlaufen. Je nach Grenzverlauf steuert die Steuerungseinrichtung die Lackierroboter entsprechend.

Durch die Steuerungseinrichtung könnte ferner beispielsweise ein dritter Lackierroboter derart gesteuert werden, dass ein dritter Lack mit einer dritten Farbe auf dem Sichtbereich in beispielsweise einen dritten Teilbereich, von welchem wiederum ebenfalls eine Grenze vorteilhafterweise zur Förderrichtung verläuft und diese darüber hinaus vorteilhafterweise in einem zweiten Überlappungsbereich liegen kann, appliziert. Dabei kann der jeweilige Roboterarm und das dem Roboterarm zugeordnete Spritzwerkzeug vorteilhafterweise derart gesteuert werden, dass eine Farbverteilung, und somit eine Menge an aufgesprühtem Lack beispielsweise pro Flächeneinheit entsprechend der Anforderung an die Mehrfarblackierung variiert werden kann. So kann beim Beispiel des Fahrzeugdachs beispielsweise die jeweilige Farbe, also die erste Farbe und/oder die zweite Farbe und/oder die dritte Farbe in Fahrzeugquerrichtung jeweils eine gleichbleibende, über den gesamten Erstreckungsbereich gleiche Farbe aufweisen und in Fahrzeuglängsrichtung, welche in dem Beispiel mit der Förderrichtung zusammenfällt, derart appliziert werden, dass eine jeweilige Intensität der jeweiligen Farbe gesteigert und/oder erniedrigt werden kann. Das heißt die applizierte Menge Lack pro Fläche kann beispielsweise durch das erfindungsgemäße Verfahren in Querrichtung konstant gehalten werden, wohingegen entlang der Förderrichtung ein Farbgradient der jeweiligen Farbe appliziert werden kann. Zusätzlich oder alternativ können beim Auftragen der Lacke die genannten Richtungen auch vertauscht sein, also die Lackierrichtung quasi beliebig gewählt werden. Dabei ist unter Farbgradient die kontinuierliche Änderung einer Farbe zu verstehen. Vorteilhafterweise ist die erste Farbe unterschiedlich zur zweiten Farbe und dritte Farbe, welche sie selbst von der zweiten unterscheidet.

Mit anderen Worten wird der erste Lack derart auf den ersten Teilbereich und insbesondere dessen Überlappungsbereich aufgetragen, sodass die Intensität der ersten Farbe auf dem Außenhautbauteil relativ beispielweise entlang der Förderrichtung abnimmt und quer zur Förderrichtung, das heißt also jeweils über die Breite des Sichtbereichs relativ zur Förderrichtung konstant ist, wodurch die erste Farbe gleichmäßig über die gesamte Breite entlang der Förderrichtung hin zum zweiten Teilbereich an Intensität verliert.

Dabei liegt der Erfindung die Erkenntnis zugrunde, dass bei bisherigen Kontrastdachlackierungen, damit sind Fahrzeuglackierungen gemeint, bei welchen das Fahrzeugdach des Kraftfahrzeugs im Vergleich zum Rest des Kraftfahrzeugs eine andere Farbe aufweist, das Fahrzeugdach mittels eines sogenannten Linetrackings mit zwei Lackierrobotern, welche jeweils beispielsweise aus einem Roboterarm und einem Spritzwerkzeug gebildet werden, in Längsrichtung, also der Förderrichtung, welche der Fahrtrichtung des fertig lackierten Fahrzeugs entspricht, lackiert werden. Dabei sind bei einer Standardlackierstation, insbesondere für den Fall, dass eine ganze beziehungsweise fast vollständig montierte Karosserie durch das die Lackierstation gefördert wird, die Roboterarme gar nicht dazu ausgebildet, beispielsweise den als Fahrzeugdach ausgebildeten Sichtbereich vollständig mit dem Spritzwerkzeug zu erreichen. Das heißt ein Roboterarm, welcher beispielsweise auf einer Fahrerseite des zukünftig aus dem aus der Karosserie zu bildenden Fahrzeugs angeordnet ist, erreicht in der Regel nicht die Beifahrerseite des zugehörigen Fahrzeugdachs. Ebenso kann ein auf der Beifahrerseite montierter Lackierroboter nicht in der Lage sein, bei der Förderung des Karosserieteils durch die Lackierstation die Fahrerseite des Fahrzeugdachs derart zu erreichen, dass dort der Lack appliziert werden kann.

Das heißt für das erfindungsgemäße Verfahren sind in der Regel Modifikationen nicht nur an der Steuerungseinrichtung beziehungsweise einer auf der Steuerungseinrichtung, welche insbesondere vorteilhafterweise als elektronische Recheneinrichtung ausgebildet ist, ausgeführte Software, sondern auch Modifikationen einer Hardware, insbesondere den Roboterarmen, vorteilhaft. So kann beispielsweise der jeweilige Unterarmbereich des jeweiligen Lackierroboters durch ein geeignetes Verlängerungselement jeweils derart verlängert werden, das der jeweilige Roboterarm in der Lage ist, den Sichtbereich, über die gesamte Bereite quer zur Förderrichtung derart zu erreichen, dass das jeweilige, dem jeweiligen Roboterarm zugeordneten Spritzwerkzeug den Lack applizieren kann, wodurch das erfindungsgemäße Verfahren besonders vorteilhaft durchgeführt werden kann. Dabei kann die Verlängerung, beispielsweise insbesondere an einer Handachse des jeweiligen Roboterarms beispielsweise mittels eines Adapters durchgeführt werden, wobei abhängig von dem Außenhautbauteil eine Verlängerung beispielsweise der Handachse um 100 Millimeter genügen kann, um eine Erreichbarkeit des Spritzwerkzeugs zum Applizieren des Lacks quasi im gesamten Sichtbereich zu ermöglichen.

So ist es durch das erfindungsgemäße Verfahren möglich, dass eine Lackierung, also das Applizieren eines der Lacke mit einer der Farben, wobei die Farben vorteilhafterweise jeweils unterschiedlich zueinander sind, möglich das im Unterschied zu einer aktuellen Kontrastdachlackierung die Lackierung beziehungsweise das Applizieren des Lacks quer und nicht längs zur Förderrichtung des Außenhautbauteils erfolgt, wodurch ein besonders harmonischer Farbverlauf, insbesondere beispielsweise im Falle des Fahrzeugdachs von vorne nach hinten dargestellt werden kann. Alternativ kann der Farbverlauf beispielweise auch von der Fahrerseite zur Beifahrerseite auf dem Fahrzeugdach ausgebildet sein.

Ein weiterer Vorteil des erfindungsgemäßen Verfahrens ist, dass beispielsweise durch Anpassung der durch die Steuerungseinrichtung ausgeführten Software ein gleichzeitiges Laden und Lackieren unterschiedlicher, insbesondere als Basislacke ausgebildeter Lacke durchgeführt werden kann. So ist ein weiterer Vorteil das Verfahrens, dass innerhalb des Lackiervorgangs beziehungsweise während einer Fahrzeuglackierung, insbesondere zeitgleich, unterschiedliche Farben an den jeweiligen Roboterarmen mit jeweiligem zugehörigen Spritzwerkzeug, also an dem jeweiligen Lackierroboter angedrückt und/oder geladen werden können.

Dabei ist es durch die Steuerungseinrichtung bei dem erfindungsgemäßen Verfahren insbesondere vorteilhafterweise möglich, dass eine Einhaltung einer bestimmten Lackierreihenfolge der wenigstens zwei, insbesondere beispielsweise drei, unterschiedlichen Lacke und somit der wenigstens zwei unterschiedlichen Farben eingehalten werden kann, wodurch eine gewünschte, insbesondere Kontrastdach-, Ästhetik besonders vorteilhaft erzielt werden kann.

Ein weiterer Vorteil des erfindungsgemäßen Verfahrens ist, dass dadurch eine neuartige Farbästhetik des Außenhautbauteils erzeugt werden kann. So ist ferner durch das erfindungsgemäße Verfahren eine hohe Individualisierung des Kraftfahrzeugs möglich, was beispielsweise ein besonders großes Alleinstellungsmerkmal (Unique Selling Point) des Kraftfahrzeugs sein kann. So ist ein weiterer Vorteil des Verfahrens, dass durch die neue Form der durch das Verfahren realisierbaren Lackiertechnik gezielte Farbverläufe und Verlaufsketten geschaffen werden können, die eine innovative Lackoptik, insbesondere mit anmutenden Premiumcharakter, ermöglichen. Dabei kann insbesondere aufgrund der während des Lackierens beziehungsweise des Applizierens der Lacke stattfindenden Förderung der Förderungseinrichtung eine Taktung innerhalb eines bestehenden Produktionsablaufs eingehalten werden. Dabei kann die durch das erfindungsgemäße Verfahren hergestellte Lackierung beispielsweise von einem zukünftigen Benutzer des Fahrzeugs beispielsweise mittels einer Konfiguration beispielsweise in einem Webportal, ausgesucht werden.

In vorteilhafter Ausgestaltung der Erfindung appliziert ein dritter der wenigstens zwei Lackierroboter, welcher ein drittes an einem dritten Roboterarm gehaltenes Spritzwerkzeug aufweist, einen dritten Lack einer dritten Farbe in einem dritten Teilbereich des Sichtbereichs. Mit anderen Worten werden die wenigstens zwei Roboterarme mit dem, jeweils dem jeweiligen Roboterarm zugeordneten, jeweiligen Spritzwerkzeug sowie der dritter Roboterarm mit dem dritten Spritzwerkzeug durch die Steuerungseinrichtung gesteuert. Dabei werden bei dem Verfahren die Lackierroboter derart gesteuert, dass der Sichtbereich des Außenhautbauteils vorteilhafterweise eine, insbesondere einen kontinuierlichen Farbverlauf aufweisende, Mehrfarblackierung nach dem Applizieren der Lacke aufweist. Dabei ist der dritte Roboterarm vorteilhafterweise analog zum der ersten und/oder zweiten Roboterarm ausgebildet. Das dritte Spritzwerkzeug ist vorteilhafterweise analog zum dem ersten und/oder zweiten Spritzwerkzeug ausgebildet. Durch die Verwendung von drei Roboterarmen kann auf besonders vorteilhafte Weise eine dreifarbig Farbverlaufsästhetik, insbesondere innerhalb einer Förderungszeit, erzeugt werden. Dabei korrespondiert die Förderungszeit vorteilhafterweise mit einer Taktzeit der Fertigungslinie, von welcher die Lackierstation ein Teil sein kann. Die Förderzeit ist somit die Zeit, welche benötigt wird um das Außenhautbauteil mittels der Förderanlage durch die Lackierstation zu fördern.

In vorteilhafter Ausgestaltung der Erfindung wird entlang der Förderrichtung der erste Teilbereich vor dem zweiten Teilbereich und/oder der zweite Teilbereich vor dem dritten Teilbereich durch die Lackierstation gefördert und/oder wenigsten eine Grenze des ersten Teilbereichs und/oder des zweiten Teilbereichs und/oder des dritten Teilbereichs verläuft im Wesentlichen senkrecht zur Förderrichtung, wobei die Länge der jeweiligen Grenze insbesondere der Breite des Sichtbereichs senkrecht zur Förderrichtung an der Position der Grenze entsprechen kann. Mit anderen Worten folgt vorteilhafterweise der dritte Teilbereich auf den zweiten Teilbereich, welcher wiederum auf den ersten Teilbereich folgt. Zusätzlich oder alternativ nimmt der jeweilige Teilbereich die gesamte Breite des Sichtbereichs relativ zur Förderrichtung ein. Im Beispiel des Fahrzeugdachs folgen somit in Fahrzeuglängsrichtung auf den ersten Teilbereich der zweite Teilbereich und auf diesen der dritte Teilbereich. Vorzugsweise nimmt dabei der jeweilige Teilbereich in Fahrzeugquerrichtung die gesamte Breite des Fahrzeugdachs ein. Dadurch ergibt sich der Vorteil, dass, insbesondere aufgrund der jeweiligen Grenze welche quer zur Förderrichtung und beispielsweise somit für den Fall des Fahrzeugdachs entlang der Fahrzeugquerrichtung verläuft, der jeweilige Lack in der jeweiligen Farbe somit besonders definiert auf das Außenhautbauteil aufgetragen werden kann, wodurch die Mehrfarblackierung besonders vorteilhaft ausgebildet werden kann.

In weiterer vorteilhafter Ausgestaltung der Erfindung liegt die wenigsten eine Grenze des ersten Teilbereichs in einem ersten Überlappungsbereich, welcher, insbesondere entlang der Förderrichtung, mit dem zweiten Teilbereich überlappt und/oder liegt von dem zweiten Teilbereich die wenigsten eine Grenze in einem zweiten Überlappungsbereich, welcher, insbesondere entlang der Förderrichtung, mit dem dritten Teilbereich überlappt. Mit anderen Worten weist der erste Teilbereich einen ersten Überlappungsbereich auf, welcher zusätzlich Teil des zweiten Teilbereichs ist, sodass zumindest in dem ersten Überlappungsbereich sowohl die erste Farbe als auch die zweite Farbe durch das Applizieren des ersten Lacks beziehungsweise zweiten Lacks auf dem Außenhautbauteil sichtbar sein kann. Analog ist der zweite Überlappungsbereich sowohl Teil des zweiten Teilbereichs als auch Teil des dritten Teilbereichs, wobei der Überlappungsbereich somit wiederum in Analogie zu dem ersten Überlappungsbereich die zweite und die dritte Farbe aufweisen kann. Dabei kann der erste Überlappungsbereich auch mit dem zweiten Überlappungsbereich überlappen, wodurch beispielsweise ein besonders kontinuierlicher Farbverlauf von der ersten Farbe in dem ersten Teilbereich über die zweite Farbe in dem zweiten Teilbereich durch Zuhilfenahme des ersten Überlappungsbereichs und unter Zuhilfenahme des zweiten Überlappungsbereichs in die dritte Farbe des dritten Teilbereichs überführt werden kann. Dabei ist in dem Beispiel des Fahrzeugdachs, was aber ebenso für beliebige Außenhautbauteil, wie beispielsweise auch eine Motorhaube gilt, entlang der Förderrichtung der jeweilige Überlappungsbereich vorteilhafterweise über die gesamte Breite des Außenhautbauteils ausgebildet. Durch die wenigstens zwei Überlappungsbereiche ergibt sich der Vorteil, dass ein, insbesondere kontinuierlicher Farbverlauf, von jeweils einer der Farben zu einer weiteren Farbe des benachbarten Teilbereichs ausgebildet werden kann.

In weiterer vorteilhafter Weise wird der zweite Lack in dem zweiten Teilbereich zuerst, also vor dem ersten Lack im ersten Teilbereich und ferner beispielsweise vor dem dritten Lack im dritten Teilbereich appliziert. Dies gilt insbesondere wenn der zweite Teilbereich zwischen dem ersten und dem dritten Teilbereich auf dem Sichtbereich angeordnet ist. Mit anderen Worten erfolgt die Lackierung mit der zweiten Farbe zuerst. Durch das Applizieren des zweiten Lacks und somit der zweiten Farbe als erstes, also vor dem Applizieren des ersten und/oder beispielsweise zusätzlich vor dem Applizieren des dritten Lacks ergibt sich der Vorteil, dass ein Farbübergang von der ersten Farbe in die zweite Farbe und von dieser hin zur dritten Farbe auf besonders vorteilhafte Weise realisiert werden kann, wodurch der Farbgradient der Mehrfarblackierung besonders vorteilhafte ausgebildet werden kann.

In weiterer vorteilhafter Ausgestaltung der Erfindung wird in dem zweiten Überlappungsbereich der dritte Lack mit der dritten Farbe über dem zweiten Lack und/oder über dem ersten Lack appliziert, wobei beim Applizieren des dritten Lacks dessen Menge senkrecht zur Förderrichtung über die Breite des dritten Teilbereichs konstant gehalten wird und entlang der Förderrichtung gesteigert wird, wodurch ein, insbesondere kontinuierlicher, Farbgradient von der zweiten Farbe und/oder der ersten Farbe zur dritten Farbe in dem zweiten Überlappungsbereich gebildet wird. Mit anderen Worten kann analog zu dem ersten Überlappungsbereich ein Farbgradient besonders vorteilhaft gebildet werden. So wird durch das Applizieren des dritten Lacks in dem Überlappungsbereich ein Farbgradient gebildet, welcher über die Breite des Außenhautbauteils relativ zur Farbrichtung jeweils einen konstanten Farbton aufweist und entlang der Förderrichtung von der zweiten Farbe, insbesondere kontinuierlich, in die dritte Farbe übergeht.

So ist durch das Applizieren des ersten Lacks über den zweiten Lack mit entsprechender Variation der Menge und/oder durch das Applizieren des dritten Lacks über den zweiten und/oder ersten Lack durch entsprechendes Dosieren der Menge auf besonders vorteilhafte Weise ein Farbgradient, sowohl von der ersten in die zweite als auch von der zweiten in die dritte und/oder von der ersten in die dritte Farbe unter durchstreifen der zweiten Farbe auf besonders vorteilhafte Weise möglich.

In weiterer vorteilhafter Ausgestaltung der Erfindung ist die erste Farbe eine Metallicfarbe oder eine Unifarbe und/oder die zweite Farbe einen Metallicfarbe oder eine Unifarbe und/oder die dritte Farbe eine Metallicfarbe oder eine Unifarbe. Mit anderen Worten kann eine jeweilige der Farben eine Metallicfarbe sein, so ist beispielsweise der jeweilige Lack ein Metallicklack, wodurch ein metallischer Glanz und/oder ein metallisches Schimmern der jeweiligen Farbe erreicht werden kann. Zusätzlich oder alternativ ist die jeweilige Farbe eine Unifarbe beziehungsweise eine Basisfarbe, welche beispielsweise insbesondere Matt und/oder insbesondere glänzend ausgebildet sein kann, jedoch keinen Metalliclackeffekt aufweist. So kann es durch die Verwendung einer entsprechenden Farbe durch das erfindungsgemäße Verfahren auf besonders vorteilhafte Weise möglich sein, dass beispielsweise im Fall des Fahrzeugdachs, dass von einer ersten an der Frontscheibe angefangenen Metallicfarbe über die zweite Metallicfarbe hin zu einem Unifarbton geht, welcher beispielsweise der Farbton eines zusätzlich auf dem Fahrzeugdach montierten Spoilers darstellen kann. Dabei hat sich als Vorteil gezeigt, dass falls eine Kombination aus Metallicfarbe und Unifarbe zum Einsatz kommen, der Unifarbton als die Unifarbe beziehungsweise der entsprechende Lack als letzter Lack auf dem Sichtbereich appliziert werden soll, um eine besonders vorteilhafte Mehrfarblackierung zu erhalten.

In weiterer vorteilhafter Ausgestaltung der Erfindung wird die jeweilige Bewegung des jeweils Roboterarms und/oder des jeweiligen von dem Roboterarm gehaltenen Spritzwerkzeugs durch die Steuerungseinrichtung mit der durch die Förderanlage verursachten Bewegung, insbesondere in Förderrichtung des Außenhautbauteils, insbesondere zum Applizieren von geraden Lackbahnen senkrecht und/oder quer zur Förderrichtung, synchronisiert. Mit anderen Worten erfolgt die Steuerung des Lackierroboters, welcher durch den Roboterarm und dem an ihm gehaltenen beziehungsweise angeordneten Spritzwerkzeug gebildet wird, derart dass der Lack während das Außenhautbauteil durch die Lackierstation mittels der Förderanlage bewegt wird, sodass senkrecht zur Förderrichtung, insbesondere über die gesamte Breite des Sichtbereichs die Möglichkeit gegeben ist, eine aus dem Lack gebildete Bahn gerade auszuführen, beziehungsweise die Menge des applizierten Lacks jeweils über die gesamte Breite und/oder Länge in einem entsprechenden Bereich konstant zu halten. Dabei ergibt sich der Vorteil, dass die Mehrfarblackierung besonders präzise erfolgen kann.

In einer weiteren vorteilhaften Ausgestaltung der Erfindung wird ein vierter Roboterarm mit einem vierten Spritzwerkzeug vorgehalten, welche bei einem Ausfall eines der anderen Roboterarme und/oder Spritzwerkzeuge durch die Steuerungseinrichtung als der ausgefallene Roboterarm und/oder das ausgefallene Spritzwerkzeug verwendet werden können. Mit anderen Worten ist ein weiterer Spritzroboter, welcher durch den vierten Roboterarm und das vierte Spritzwerkzeug gebildet ist, vorgehalten, welche als so genanntes Back-Up beziehungsweise Ersatzvorrichtung vorgehalten wird, sodass bei einem Ausfall einer der anderen Lackierroboter der Produktionsprozess in der Lackierstation nicht gestoppt werden muss, sodass weiterhin eine kontinuierliche Förderung von Außenhautbauteilen durch die Lackierstation möglich ist, was beispielsweise einen besonders Vorteil bei der Verwendung des Verfahrens in einem Produktionsprozess des zu dem Außenhautbauteil zugehörigen Kraftfahrzeugs gehört.

Ein zweiter Aspekt der Erfindung betrifft eine Lackierstation für ein Außenhautbauteil, welches insbesondere ein Karosserieteil sein kann, eines Kraftfahrzeugs, welches insbesondere als Personenkraftwagen ausgebildet ist, mit einer Förderanlage zum Fördern des Außenhautbauteils entlang einer Förderrichtung durch die Lackierstation, mit wenigstens zwei jeweils an einem Roboterarm gehaltene Spritzwerkzeugen, durch welche jeweils Lack auf einen Sichtbereich des Außenhautbauteils, insbesondere definiert, applizierbar ist.

Damit durch das Verfahren auf besonders vorteilhafte Weise eine Mehrfarblackierung, insbesondere mit kontinuierlichen Farbübergängen zwischen einzelnen Farben erzeugt werden kann, ist es erfindungsgemäß vorgesehen, dass die Lackierstation eine Steuerungseinrichtung aufweist, die die wenigstens zwei Roboterarme mit dem jeweiligen Spritzwerkzeug sowie insbesondere zusätzlich einen dritter Roboterarm mit einem dritten Spritzwerkzeug zum Applizieren des Lacks steuert. Dabei ist die Lackierstation derart ausgebildet, dass das erste Spritzwerkzeug dazu ausgebildet ist, einen ersten Lack einer ersten Farbe in einem ersten Teilbereich des Sichtbereichs zu applizieren, das zweite Spritzwerkzeug dazu ausgebildet ist, einen zweiten Lack einer zweiten Farbe in einem zweiten Teilbereich des Sichtbereichs zu applizieren. Zusätzlich könnte das dritte Spritzwerkzeug dazu ausgebildet sein, einen dritten Lack einer dritten Farbe in einem dritten Teilbereich des Sichtbereichs zu applizieren. Dabei wird in einem Überlappungsbereich, innerhalb welchem der erste Teilbereich mit dem zweiten Teilbereich überlappt, der erster Lack über dem zweiten Lack appliziert und beim Applizieren des ersten Lacks wird in dem Überlappungsbereich die Menge des ersten Lacks senkrecht zu einer Lackierrichtung, welche insbesondere deckungsgleich mit der Förderrichtung ist, konstant gehalten und/oder entlang der Lackierrichtung reduziert, wodurch ein Farbgradient von der ersten Farbe zur zweiten Farbe in dem Überlappungsbereich gebildet wird.

In weiterer vorteilhafter Ausgestaltung der Erfindung weist der erste und/oder der zweite und/oder der dritte Roboterarm ein Verlängerungselement entlang einer jeweiligen Handachse auf. Mit anderen Worten ist in einem jeweiligen Unterarmbereich beziehungsweise Handbereich, an welchem das jeweilige Spritzwerkzeug an dem Roboterarm gehalten ist, ein Verlängerungselement vorgesehen, welches insbesondere dazu dient, dass das Außenhautbauteil in seinem Sichtbereich von jedem des ersten, zweiten beziehungsweise dritten Roboterarms insbesondere quer zur Förderrichtung, also in der Breite des Sichtbereichs mit Lack appliziert werden kann.

In weiterer vorteilhafter Ausgestaltung der Erfindung ist ein Andrehwinkel zumindest eines der Spritzwerkzeuge relativ zu dem Roboterarm, an welchem das Spritzwerkzeug gehalten ist, durch die Steuerungseinrichtung variierbar, sodass die Menge des Lacks, welcher auf dem jeweils zugehörigen Teilbereich applizierbar ist, bestimmbar ist. Mit anderen Worten kann durch den Andrehwinkel, welcher beispielsweise als Lackierwinkel bezeichnet werden kann, ein Winkel des Spritzwerkzeugs beziehungsweise des Applikators relativ zu dem Sichtbereich einstellt werden, sodass die Menge des Lacks in dem jeweiligen Teilbereich variiert werden kann, da beispielweise durch Veränderung des Winkels ein größer Flächenbereich des Teilbereich pro Zeiteinheit angesprüht wird, wodurch sich eine gleiche Menge Lack auf eine größere Fläche verteilt.

Dabei sind Vorteile des ersten Aspekts der Erfindung als Vorteile des zweiten Aspekts der Erfindung anzusehen und umgekehrt.

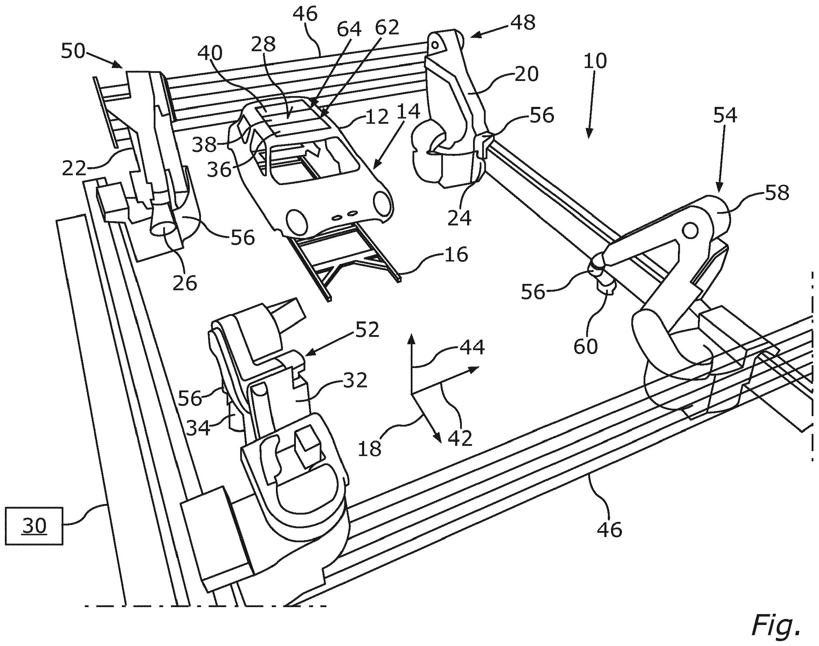

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnung näher erläutert.

Es zeigt Fig. eine schematische Perspektivansicht einer Lackierstation durch welche ein Außenhautbauteil eines Kraftfahrzeugs während eines Lackierens gefördert wird.

Die einzige Fig. zeigt in einer schematischen Perspektivansicht eine Lackierstation 10 für ein Außenhautbauteil 12, insbesondere einer Karosserie 14, eines Kraftfahrzeugs, mit einer Förderanlage 16 zum Fördern des Außenhautbauteils 12 entlang einer Förderrichtung 18 durch die Lackierstation 10. Dabei umfasst die Lackierstation 10 wenigstens zwei Lackierroboter 48, 50, mit jeweils einem an einem Roboterarm 20, 22 gehaltenen Spritzwerkzeug 24, 26, durch welche jeweils Lack auf einen Sichtbereich 28 des Außenhautbauteils 12 appliziert werden kann, beziehungsweise, insbesondere definiert, applizierbar ist.

Damit durch die Lackierstation 10 beziehungsweise ein mittels der Lackierstation 10 durchführbares Verfahren, bei welchem insbesondere während einer, insbesondere kontinuierlich während des Applizierens des Lacks stattfindenden, Förderung des Außenhautbauteils 12 beziehungsweise der Karosserie 14 durch die Lackierstation 10, auf besonders vorteilhafte Weise eine Mehrfarblackierung durchgeführt werden kann, weist die Lackierstation 10 eine Steuerungseinrichtung 30 auf. Durch die Steuerungseinrichtung 30 werden die wenigstens zwei Lackierroboter 48, 50 so gesteuert werden, dass das erste Spritzwerkzeug 24 des ersten der wenigstens zwei Lackierroboter 48 einen ersten Lack einer ersten Farbe in einem ersten Teilbereich 36 des Sichtbereichs 28 und das zweite Spritzwerkzeug 26 des zweiten der wenigstens zwei Lackierroboter 50 einen zweiten Lack einer zweiten Farbe in einem zweiten Teilbereich 38 des Sichtbereichs 28 appliziert. Dabei wird in einem Überlappungsbereich 62, innerhalb welchem der erste Teilbereich 36 mit dem zweiten Teilbereich 38 überlappt, der erster Lack über dem zweiten Lack appliziert. Bei dem Applizieren des ersten Lacks in dem Überlappungsbereich wird die Menge des ersten Lacks senkrecht zu einer Lackierrichtung, welche insbesondre der Förderrichtung 18 entspricht, konstant gehalten und/oder entlang der Lackierrichtung reduziert, wodurch ein Farbgradient von der ersten Farbe zur zweiten Farbe in dem Überlappungsbereich 62 gebildet wird.

Ferner ist mittels der Steuerungseinrichtung 30 zusätzlich zu den wenigstens zwei Roboterarmen 20 und 22 mit den jeweiligen Spritzwerkzeugen 24, 26 beispielsweise ein dritter Roboterarm 32 mit einem an dem dritten Roboterarm 32 gehaltenen Spritzwerkzeug 34 zum Applizieren des Lacks steuerbar.

Das heißt die Steuerungseinrichtung 30 ist dazu ausgebildet, beispielsweise in den jeweiligen Roboterarmen 20, 22 und 32 enthaltene Aktoren anzusteuern, sodass die Roboterarme 20, 22, 32, 58 und die an ihnen gehaltenen Spritzwerkzeuge 24, 26, 34, 60 derart bewegbar sind, dass der jeweilige Lack, wie für einen Lackierprozess beziehungsweise das Lackieren des Außenhautbauteils 12 vorgesehen, applizierbar ist. Dabei ist das erste Spritzwerkzeug 24 dazu ausgebildet, einen ersten Lack einer ersten Farbe in einem ersten Teilbereich 36 des Sichtbereichs 28 zu applizieren, dass zweite Spritzwerkzeug 26 dazu ausgebildet, einen zweiten Lack einer zweiten Farbe in einem zweiten Teilbereich 38 zu applizieren und das dritte Spritzwerkzeug 36 dazu ausgebildet einen dritten Lack einer dritten Farbe in einem dritten Teilbereich 40 des Sichtbereichs 28 zu applizieren.

Durch die gezeigte Lackierstation 10 ist es somit auf besonders vorteilhafte Weise möglich, auf dem Außenhautbauteil 12, welches im gezeigten Ausführungsbeispiel als Fahrzeugdach der Karosserie 14 ausgebildet ist, dessen Sichtbereich 28 derart zu lackieren, dass ein Farbübergang von der ersten Farbe über die zweite Farbe hin zur dritten Farbe ermöglicht wird. Dabei können die Roboterarme 20, 22 und 32 mit ihren jeweils an ihnen gehaltenen Spritzwerkzeugen 24, 26 und 34, welche beispielsweise als Applikatoren für den Lack ausgebildet sind, insbesondere durch die Steuerungseinrichtung 30 derart gesteuert werden, dass der Farbverlauf, insbesondere kontinuierlich ausgeführt wird beziehungsweise lackiert ist.

So kann durch die gezeigte Lackierstation 10 auf besonders vorteilhafte Weise ein besonders hochwertiges Exterieurdesign für das aus der Karosserie 14 zu produzierende Kraftfahrzeug, welches insbesondere als Personenkraftwagen ausgebildet ist, erzeugt werden, wodurch das Kraftfahrzeug beispielsweise besonders wertig anmutet und/oder eine besonders hohe Funktionalität aufweisen kann.

Durch die gezeigte Lackierstation 10 kann ein Verfahren zum Lackieren des Außenhautbauteils 12 durchgeführt werden, bei welchem das Außenhautbauteil 12 mittels der Förderanlage 16 entlang der Förderrichtung 18, welche im Wesentlichen senkrecht zur Längserstreckungsrichtung des Außenhautbauteils 12 ist, durch die Lackierstation 10, insbesondere kontinuierlich, während des Applizierens des Lacks beziehungsweise der Lacke, also dem ersten und/oder dem zweiten und/oder dem dritten Lack, gefördert werden. Bei dem Verfahren wird durch die wenigstens zwei an jeweils dem Roboterarm 20 beziehungsweise 22 gehaltenen Spritzwerkzeuge 24 beziehungsweise 26 der jeweilige Lack auf den Sichtbereich 28 das Außenhautbauteils in zumindest dem ersten Teilbereich 36 und/oder dem zweiten Teilbereich 38 appliziert, wodurch insbesondere ein Sprühen oder ähnliches verstanden werden kann.

Vorteilhafterweise wird bei dem Verfahren der dritte Roboterarm 32 mit dem an ihm gehaltenen dritten Spritzwerkzeug 34 durch die Steuerungseinrichtung 30, welche auch den ersten Roboterarm 20 mit dem ersten Spritzwerkzeug 24 und den zweiten Roboterarm 22 mit dem zweiten Spritzwerkzeug 26 gesteuert, wobei das erste Spritzwerkzeug 24 dazu ausgebildet ist, den ersten Lack der ersten Farbe in dem ersten Teilbereich 36 des Sichtbereichs 28 zu applizieren, und das zweite Spritzwerkzeug 26 dazu ausgebildet ist, den zweiten Lack der zweiten Farbe in dem zweiten Teilbereich 38 des Sichtbereichs 28 zu applizieren und das dritte Spritzwerkzeug 34 dazu ausgebildet ist, den dritten Lack der dritten Farbe im dritten Teilbereich 40 des Sichtbereichs 28 zu applizieren.

Der erste Roboterarm 20 mit dem an ihm gehaltenen ersten Spritzwerkzeug 24 bildet einen ersten Lackierroboter 48, der zweite Roboterarm 22 mit dem an ihm gehaltenen zweiten Spritzwerkzeug 26 bildet einen zweiten Lackierroboter 50 und der dritte Roboterarm 32 mit dem an ihm gehaltenen dritten Spritzwerkzeug 34 bildet einen dritten Lackierroboter 52.

Die Förderrichtung 18 fällt in dem gezeigten Ausführungsbeispiel mit der Fahrzeuglängsrichtung zusammen. Somit ist die Fahrzeugquerrichtung 42 senkrecht zur Förderrichtung 18. Die Fahrzeughochrichtung 44 ist ebenfalls durch einen Pfeil dargestellt.

Damit durch das Verfahren zum Lackieren des Außenhautbauteils 12 beispielsweise besonders vorteilhaft eine Prozesszeit eingehalten werden kann, weist die Lackierstation 10 Lichtschranken 46 auf. Mittels der Lichtschranken 46 kann ein Eintritt und/oder ein Austritt der durch die Förderanlage 16 entlang der Förderrichtung 18 geförderte Karosserie 14 ermittelt werden, wodurch beispielweise die Prozesszeit an eine nicht gezeigte Produktionsstraße, von welcher die Lackierstation 10 ein Teil ist, angepasst werden kann. Ferner kann mittels der Lichtschranken 46 eine Überwachung des Verfahrens beziehungsweise der Lackierstation 10 durchgeführt werden, sodass beispielsweise der jeweilige Lackierroboter 48, 50, 52, 54 abgeschaltet werden kann, falls dieser noch sprüht, sobald eine der Lichtschranken 46 durch die Karosserie 14 unterbrochen wird.

Damit der jeweilige Lackierroboter 48, 50 und/oder 52 in der Lage ist, die gesamte Breite, entlang der Fahrzeugquerrichtung 42 des Sichtbereichs 28 beziehungsweise des jeweiligen Teilbereichs 36, 38, 40 zu erreichen, kann der jeweilige Lackierroboter 48, 50 und 52 beziehungsweise der jeweilige Roboterarm 20, 22 beziehungsweise 34 ein jeweiliges Verlängerungselement 56 umfassen beziehungsweise aufweisen. Dabei ist das jeweilige Verlängerungselement 56 eine jeweilige Verlängerung des jeweiligen Lackierroboters 48, 50, 52 beziehungsweise des jeweiligen Roboterarms 20, 22, 32.

Vorteilhafter Weise kann ein Andrehwinkel zumindest eines der Spritzwerkzeuge 24, 26, 34 relativ zu dem Roboterarm 20, 22, 32 an welchem das Spritzwerkzeug 24, 26, 34 gehalten ist durch die Steuerungseinrichtung 30 variiert werden, sodass die Menge des Lacks, welcher auf dem jeweils zugehörigen Teilbereich 36, 38, 40 applizierbar ist beziehungsweise appliziert wird, bestimmt wird, beziehungsweise bestimmbar ist. Das heißt durch Drehen um einen Andrehwinkel, insbesondere relativ zu dem Sichtbereich 28 des jeweiligen Spritzwerkzeugs 24, 26, 34 kann die Menge der pro Flächeneinheit in einem Bereich des jeweiligen Teilbereichs 36, 38, 40 derart variiert werden, dass eine Intensität der jeweiligen Farbe, also der ersten beziehungsweise zweiten beziehungsweise dritten Farbe entlang des Bereichs, insbesondere in einem jeweiligen Überlappungsbereich 62, 64 ab- beziehungsweise zunimmt. Dies geschieht dadurch, dass durch eine Variation des Andrehwinkels relativ zu der Sichtfläche, dem Sichtbereich 28, des Außenhautbauteils 12 die Anzahl der auf diesem niederregnenden Farbpartikel beziehungsweise Lackpartikel des jeweiligen Lacks variiert werden kann.

Vorteilhafter Weise wird ein vierter Roboterarm 58 vorgehalten, welcher mit einem an ihm gehaltenen vierten Spritzwerkzeug 60 insbesondere einem vierten Lackierroboter 54 in der Lackierstation 10 vorgehalten ist. Dieser vierte Lackierroboter 54 kann bei einem Ausfall eines der anderen Roboterarme 20, 22, 32 und/oder Spritzwerkzeuge 24, 26, 34, beziehungsweise eines der anderen Lackierroboter 48, 50, 52 durch die Steuerungseinrichtung 30 als Ersatz für den ausgefallenen Lackierroboter 48, 50, 52 verwendet werden.

Das Verfahren wird dabei vorteilhafterweise so durchgeführt, dass die Steuerungseinrichtung 30 den zweiten Roboterarms 22 und das zweiten Spritzwerkzeug 26 so steuert, dass der zweite Lack der zweiten Farbe innerhalb des Sichtbereichs 28 in dem zweiten Teilbereich 38 appliziert wird, wobei dessen erste Grenze und dessen zweite Grenze jeweils senkrecht zur Förderrichtung 18 und somit parallel zur Fahrzeugquerrichtung 42 verlaufen. Dazu wird vorteilhafterweise der zweite Lack auch vor dem ersten und dem dritten Lack appliziert, das heißt das die Reihenfolge der Applikationen der einzelnen Lacke vorgegeben werden kann.

Dazu liegt vorteilhafterweise entlang der Förderrichtung 18 der erste Teilbereich 36 vor dem zweiten Teilbereich 38 und/oder der zweite Teilbereich 38 vor dem dritten Teilbereich 40, sodass die Förderung durch die Lackierstation 10 eine definierte Aneinanderreihung der Teilbereiche 36, 38, 40 vorgibt, welche insbesondere jeweils an einander grenzen, das heißt der erste Teilbereich 36 grenzt wenigstens an den zweiten Teilbereich 38 beziehungsweise bilden der erste Teilbereich 36 und der zweite Teilbereich 38 vorteilhafter Weise einen ersten Überlappungsbereich 62. Der zweite Teilbereich 38 grenzt wenigstens an den dritten Teilbereich 40 beziehungsweise bildet der zweite Teilbereich 38 mit dem dritten Teilbereich 40 einen zweiten Überlappungsbereich 64. Dabei können der erste Überlappungsbereich 62 und der zweite Überlappungsbereich 64 auch selbst überlappen. Dabei ist die jeweilige Überlappung der jeweiligen Teilbereiche 36, 38, 40 insbesondere abhängig von den gewünschten Farbübergängen der durch das Verfahren beziehungsweise durch die Lackierstation 10 realisierbaren Mehrfarblackierung des Außenhautbauteils 12 der Karosserie 14 des Kraftfahrzeugs.

Insbesondere nach dem Applizieren des zweiten Lacks wird durch die Steuerung mittels der Steuerungseinrichtung 30, des ersten Roboterarms 20 und das ersten Spritzwerkzeugs 24 der erste Lack mit der ersten Farbe auf dem Sichtbereich 28 in dem ersten Teilbereich 36 appliziert beziehungsweise aufgetragen, beispielsweise durch Aufsprühen und/oder elektrostatische Effekte oder ein weiteres Lackierverfahren. Die Art des Lackierverfahrens ist frei wählbar und hängt von der Beschaffenheit des jeweiligen Lacks (erster, zweiter, dritter) ab.

Bei dem Applizieren des ersten Lacks über den zweiten Lack wird insbesondere die Menge entlang der Fahrzeugquerrichtung 42 in dem ersten Überlappungsbereich 62 beziehungsweise in dem ersten Teilbereich 36 und/oder zweiten Teilbereich 38 derart appliziert, dass die Menge über die Breite, also entlang der Fahrzeugquerrichtung 42 konstant gehalten wird, wohingegen in Förderrichtung 18 die Menge des ersten Lacks reduziert wird, sodass ein Durchscheinen des zweiten Lacks ermöglicht wird, wobei dies vorteilhafter Weise dergestalt durchgeführt wird, dass ein kontinuierlicher Farbübergang, also ein so genannter Farbgradient von der ersten Farbe hin zur zweiten Farbe realisiert wird. Analog wird mit dem Auftragen des dritten Lacks über dem zweiten Lack und/oder dem ersten Lack verfahren, so wird beim Applizieren des dritten Lacks dessen Menge senkrecht zur Förderrichtung, also in Fahrzeugquerrichtung 42 auf dem Sichtbereich 28 konstant gehalten, wohingegen entlang der Förderrichtung 18 die Menge des dritten Lacks gesteigert wird, wodurch ein, insbesondere kontinuierlicher, Farbgradient von der zweiten Farbe und/oder der ersten Farbe hin zur dritten Farbe in dem zweiten Überlappungsbereich 64 beziehungsweise somit in dem zweiten Teilbereich 38 und dem dritten Teilbereich 40 gebildet wird.

Mit anderen Worten wird mittels der Steuerungseinrichtung 30 der dritte Lackierroboter 52 derart gesteuert, dass durch die Steuerung der dritte Lack mit der dritten Farbe auf dem Sichtbereich 28 in dem dritten Teilbereich 40, von welchem wenigstens eine Grenze senkrecht zur Förderrichtung 18 verläuft und diese in dem zweiten Überlappungsbereich 64 liegt, appliziert. Ferner überlappt entlang der Förderrichtung 18 in dem zweiten Überlappungsbereich 64 der zweite Teilbereich 38 mit dem dritten Teilbereich 40 und in dem zweiten Überlappungsbereich 64 wird der dritte Lack über dem zweiten Lack und/oder ersten Lack appliziert. Dabei kann beim Applizieren des dritten Lacks dessen Menge senkrecht zur Förderrichtung gleich bleiben (Fahrzeugquerrichtung 42) und entlang der Förderrichtung 19 gesteigert werden, wodurch der kontinuierliche Farbgradient erzeugt werden kann. Je nach Wahl der Lackierrichtung, welche im Ausführungsbeispiel gleich der Förderrichtung 18 orientiert ist, kann der Farbverlauf entlang einer beliebigen Richtung auf dem Außenhautbauteil 12 ausgebildet werden.

Vorteilhafter Weise ist die erste Farbe eine Metallicfarbe und somit der erste Lack ein Metalliclack beziehungsweise ist die erste Farbe eine Unifarbe und somit der Lack ein Unilack. Zusätzlich oder alternativ ist die zweite Farbe eine Metallicfarbe und somit der zweite Lack ein Metalliclack oder die zweite Farbe ist eine Unifarbe und somit der zweite Lack ein Unilack. Zusätzlich oder alternativ ist die dritte Farbe eine Metallicfarbe und somit der dritte Lack ein Metalliclack und/oder die dritte Farbe eine Unifarbe und somit der dritte Lack ein Unilack. Dadurch können beispielsweise Farbübergänge von einer ersten Metallicfarbe in eine zweite Metallicfarbe hin zu einer Unifarbe realisierbar sein beziehungsweise kann die Unifarbe auch die mittlere Farbe und somit die zweite Farbe sein und somit die Mehrfarblackierung von einer Metallic- in eine Unifarbe und wieder in eine Metallicfarbe übergehen. Dabei sind beliebige Kombinationen realisierbar. Wobei vorteilhafterweise die wenigstens eine Unifarbe nach der wenigstens einen Metallicfarbe aufgetragen wird, was zu einem besseren Farbverlauf führen kann.

Fällt einer der Lackierroboter 48, 50, 52 beziehungsweise 54 aus, kann mittels Spülung des jeweils dem Roboterarm 20, 22, 32, 58 zugehörigen Applikators, also des Spritzwerkzeugs 24, 26, 34, 60, dieses jeweils vorbereitet werden, sodass insbesondere im laufenden Betrieb, also während des Förderns der Karosserie 14 mittels der Förderanlage 10 durch beispielsweise die Fertigungsstraße, an welcher die Lackierstation 10 angeordnet ist, quasi im laufenden Betrieb, die Farbe gewechselt werden kann. Durch die Steuerungseinrichtung 30 können dabei die Bewegungen der jeweiligen Lackierroboter 48, 50, 52 und 54 ihr jeweiliges Sprüh- beziehungsweise Applizierverhalten angepasst werden.

Dabei ist der jeweilige Lackierroboter 48, 50, 52 und 54 jeweils so durch die Steuerungseinrichtung 30 steuerbar, dass dessen jeweilige Bewegung zu der durch die Förderanlage 16 insbesondere entlang der Förderrichtung verursachten Bewegung des Außenhautbauteils 12, insbesondere zum Applizieren von, insbesondere geraden Lackbahnen in Fahrzeugquerrichtung, also senkrecht zur Förderrichtung 18, synchronisiert wird. Durch die Synchronisation der Lackierroboter 48, 50, 52 und 54 kann somit der Farbverlauf, beziehungsweise der jeweilige Farbgradient von der jeweiligen ersten in die zweite und/oder dritte Farbe besonders präzise durchgeführt werden und gleichzeitig beispielsweise eine Funktionalität des Kraftwagens besonders betont werden.

### Bezugszeichenliste

- 10: Lackierstation
- 12: Außenhautbauteil
- 14: Karosserie
- 16: Förderanlage
- 18: Förderrichtung
- 20: erster Roboterarm
- 22: zweiter Roboterarm
- 24: erstes Spritzwerkzeug
- 26: zweites Spritzwerkzeug
- 28: Sichtbereich
- 30: Steuerungseinrichtung
- 32: dritter Roboterarm
- 34: drittes Spritzwerkzeug
- 36: erster Teilbereich
- 38: zweiter Teilbereich
- 40: dritter Teilbereich
- 42: Fahrzeugquerrichtung
- 44: Fahrzeughochrichtung
- 46: Lichtschranke
- 48: erster Lackierroboter
- 50: zweiter Lackierroboter
- 52: dritter Lackierroboter
- 54: vierter Lackierroboter
- 56: Verlängerungselement
- 58: vierter Roboterarm
- 60: viertes Spritzwerkzeug
- 62: erster Überlappungsbereich
- 64: zweiter Überlappungsbereich

## Patentansprüche

1. Verfahren zum Lackieren eines Außenhautbauteils (12) eines Kraftfahrzeugs, bei welchem das Außenhautbauteil (12) mittels einer Förderanlage (16) entlang einer Förderrichtung (18) durch eine Lackierstation (10) gefördert wird, welche wenigstens zwei Lackierroboter (48, 50, 52, 54), mit jeweils einem an einem Roboterarm (20, 22, 32, 58) gehaltenen Spritzwerkzeug (24, 26, 34, 60), aufweist, durch welche jeweils Lack auf einen Sichtbereich (28) des Außenhautbauteils (12) appliziert wird,
**dadurch gekennzeichnet, dass**
durch eine Steuerungseinrichtung (30) die wenigstens zwei Lackierroboter (48, 50, 52, 54) so gesteuert werden, dass das erste Spritzwerkzeug (24) des ersten der wenigstens zwei Lackierroboter (48) einen ersten Lack einer ersten Farbe in einem ersten Teilbereich (36) des Sichtbereichs (28) und das zweite Spritzwerkzeug (26) des zweiten der wenigstens zwei Lackierroboter (50) einen zweiten Lack einer zweiten Farbe in einem zweiten Teilbereich (38) des Sichtbereichs (28) appliziert, wobei in einem Überlappungsbereich (62), innerhalb welchem der erste Teilbereich (36) mit dem zweiten Teilbereich (38) überlappt, der erster Lack über dem zweiten Lack appliziert wird und beim Applizieren des ersten Lacks in dem Überlappungsbereich die Menge des ersten Lacks senkrecht zu einer Lackierrichtung konstant gehalten wird und/oder entlang der Lackierrichtung reduziert wird, wodurch ein Farbgradient von der ersten Farbe zur zweiten Farbe in dem Überlappungsbereich (62) gebildet wird.

2. Verfahren nach Anspruch 1,
**dadurch gekennzeichnet, dass**
ein dritter Lackierroboter (52) der wenigstens zwei Lackierroboter (48, 50, 52, 54), welcher ein drittes an einem dritten Roboterarm (32) gehaltenes Spritzwerkzeug (34) aufweist, einen dritten Lack einer dritten Farbe in einem dritten Teilbereich (38) des Sichtbereichs (28) appliziert.

3. Verfahren nach Anspruch 2,
**dadurch gekennzeichnet, dass**
entlang der Förderrichtung (18) der erste Teilbereich (36) vor dem zweiten Teilbereich (38) und/oder der zweite Teilbereich (38) vor dem dritten Teilbereich (40) durch die Lackierstation (10) gefördert wird und/oder wenigsten eine Grenze des ersten Teilbereichs (36) und/oder des zweiten Teilbereichs (38) und/oder des dritten Teilbereichs (40) im Wesentlichen senkrecht zur Förderrichtung (18) verläuft.

4. Verfahren nach Anspruch 2 oder 3,
**dadurch gekennzeichnet, dass**
von dem ersten Teilbereich (36) die wenigsten eine Grenze in dem ersten Überlappungsbereich (62) liegt, welcher mit dem zweiten Teilbereich (38) überlappt und/oder von dem zweiten Teilbereich (38) die wenigsten eine Grenze in einem zweiten Überlappungsbereich (64) liegt, welcher mit dem dritten Teilbereich (40) überlappt.

5. Verfahren nach einem der Ansprüche 2 bis 4,
**dadurch gekennzeichnet, dass**
der zweite Lack in dem zweiten Teilbereich (38) zuerst appliziert wird.

6. Verfahren nach einem der Ansprüche 2 bis 5,
**dadurch gekennzeichnet, dass**
in dem zweiten Überlappungsbereich (64) der dritte Lack über dem zweiten Lack und/oder über dem ersten Lack appliziert wird, wobei beim Applizieren des dritten Lacks dessen Menge senkrecht zur Förderrichtung (18) über die Breite des dritten Teilbereichs (40) konstant gehalten wird und/oder entlang der Förderrichtung (18) gesteigert wird, wodurch ein Farbgradient von der zweiten Farbe und/oder der ersten Farbe zur dritten Farbe in dem zweiten Überlappungsbereich (64) gebildet wird.

7. Verfahren nach einem der Ansprüche 2 bis 6,
**dadurch gekennzeichnet, dass**
die erste Farbe eine Metallicfarbe oder eine Unifarbe ist und/oder die zweite Farbe einen Metallicfarbe oder eine Unifarbe ist und/oder die dritte Farbe eine Metallicfarbe oder eine Unifarbe ist.

8. Verfahren nach einem der vorhergehenden Ansprüche,
**dadurch gekennzeichnet, dass**
die jeweilige Bewegung des jeweils Roboterarms (20, 22, 32, 58) und/oder des jeweiligen Spritzwerkzeugs (24, 26, 34, 60) durch die Steuerungseinrichtung (30) mit der durch die Förderanlage (16) verursachten Bewegung des Außenhautbauteils (12) synchronisiert wird.

9. Verfahren nach einem der vorhergehenden Ansprüche,
**dadurch gekennzeichnet, dass**
ein vierter Roboterarm (58) mit einem vierten Spritzwerkzeug (60) vorgehalten wird, welche bei einem Ausfall eines der anderen Roboterarme (20, 22, 32, 58) und/oder Spritzwerkzeuge (24, 26, 34, 60) durch die Steuerungseinrichtung (30) als der ausgefallene Roboterarm (20, 22, 32, 58) und/oder das ausgefallene Spritzwerkzeug (24, 26, 34, 60) verwendet werden.

10. Lackierstation (10) für ein Außenhautbauteil (12) eines Kraftfahrzeugs, mit einer Förderanlage (16) zum Fördern des Außenhautbauteils (12) entlang einer Förderrichtung (18) durch die Lackierstation (10), welche wenigstens zwei Lackierroboter (48, 50, 52, 54), mit jeweils einem an einem Roboterarm (20, 22, 32, 58) gehaltenen Spritzwerkzeug (24, 26, 34, 60) aufweist, durch welche jeweils Lack auf einen Sichtbereich (28) des Außenhautbauteils (12), insbesondere definiert, applizierbar ist,
**gekennzeichnet, durch**
eine Steuerungseinrichtung (30), durch welche die wenigstens zwei Lackierroboter (48, 50, 52, 54) derart steuerbar sind, dass das erste Spritzwerkzeug (24) des ersten der wenigstens zwei Lackierroboter (48) einen ersten Lack einer ersten Farbe in einem ersten Teilbereich (36) des Sichtbereichs (28) und das zweite Spritzwerkzeug (26) des zweiten der wenigstens zwei Lackierroboter (50) einen zweiten Lack einer zweiten Farbe in einem zweiten Teilbereich (38) des Sichtbereichs (28) appliziert, wobei in einem Überlappungsbereich (62), innerhalb welchem der erste Teilbereich (36) mit dem zweiten Teilbereich (38) überlappt, der erster Lack über dem zweiten Lack applizierbar ist und beim Applizieren des ersten Lacks in dem Überlappungsbereich (62) die Menge des ersten Lacks senkrecht zu einer Lackierrichtung konstant gehalten wird und/oder entlang der Lackierrichtung reduziert wird, wodurch ein Farbgradient von der ersten Farbe zur zweiten Farbe in dem Überlappungsbereich (62) gebildet wird.

11. Lackierstation (10) nach Anspruch 10,
**dadurch gekennzeichnet, dass**
das der erste Roboterarm (20) und/oder der zweite Roboterarm (22) und/oder ein dritter Roboterarm (32) und/oder ein vierter Roboterarm (58) ein Verlängerungselement (56) entlang einer jeweiligen Handachse aufweist beziehungsweise aufweisen.

12. Lackierstation (10) nach Anspruch 10 oder 11,
**dadurch gekennzeichnet, dass**
ein Andrehwinkel zumindest eines der Spritzwerkzeuge (24, 26, 34, 60) relativ zu dem Roboterarm (20, 22, 32, 58), an welchem das Spritzwerkzeug (24, 26, 34, 60) gehalten ist, durch die Steuerungseinrichtung (30) variierbar ist, sodass die Menge des Lacks, welcher auf dem jeweils zugehörigen Teilbereich (36, 38, 40) applizierbar ist, bestimmbar ist.

## Claims

1. Method for painting an outer skin component (12) of a motor vehicle, in which method the outer skin component (12) by means of a conveying system (16) is conveyed along a conveying direction (18) through a painting station (10) which has at least two painting robots (48, 50, 52, 54) having in each case one spraying tool (24, 26, 34, 60) which is held on a robotic arm (20, 22, 32, 58) and by way of which paint is in each case applied to a visible region (28) of the outer skin component (12),
**characterized in that**
the at least two painting robots (48, 50, 52, 54) by a control installation (30) are controlled such that the first spraying tool (24) of the first of the at least two painting robots (48) applies a first paint of a first color in a first sub-region (36) of the visible region (28), and the second spraying tool (26) of the second of the at least two painting robots (50) applies a second paint of a second color in a second sub-region (38) of the visible region (28), wherein in an overlap region (62) within which the first sub-region (36) overlaps the second sub-region (38) the first paint is applied over the second paint and, when applying the first paint in the overlap region, the quantity of the first paint perpendicular to a painting direction is kept constant and/or is reduced along the painting direction, as a result of which a color gradient from the first color to the second color is formed in the overlap region (62).

2. Method according to Claim 1,
**characterized in that**
a third painting robot (52) of the at least two painting robots (48, 50, 52, 54), the third painting robot (52) having a third spraying tool (34) held on a third robotic arm (32), applies a third paint of a third color in a third sub-region (38) of the visible region (28).

3. Method according to Claim 2,
**characterized in that**
the first sub-region (36) is conveyed along the conveying direction (18) through the painting station (10) before the second sub-region (38), and/or the second sub-region (38) before the third sub-region (40), and/or at least one border of the first sub-region (36) and/or of the second sub-region (38) and/or of the third sub-region (40) runs so as to be substantially perpendicular to the conveying direction (18).

4. Method according to Claim 2 or 3,
**characterized in that**
the at least one border of the first sub-region (36) lies in the first overlap region (62) which overlaps the second sub-region (38), and/or the at least one border of the second sub-region (38) lies in a second overlap region (64) which overlaps the third sub-region (40).

5. Method according to one of Claims 2 to 4,
**characterized in that**
the second paint in the second sub-region (38) is applied first.

6. Method according to one of Claims 2 to 5,
**characterized in that**
in the second overlap region (64) the third paint is applied over the second paint and/or over the first paint, wherein when applying the third paint the quantity thereof perpendicular to the conveying direction (18) is kept constant across the width of the third sub-region (40) and/or is increased along the conveying direction (18), as a result of which a color gradient from the second color and/or the first color to the third color is formed in the second overlap region (64).

7. Method according to one of Claims 2 to 6,
**characterized in that**
the first color is a metallic color or a solid color, and/or the second color is a metallic color or a solid color, and/or the third color is a metallic color or a solid color.

8. Method according to one of the preceding claims,
**characterized in that**
the respective movement of the respective robotic arm (20, 22, 32, 58) and/or of the respective spraying tool (24, 26, 34, 60) by the control installation (30) is synchronized with the movement of the outer skin component (12) caused by the conveying system (16).

9. Method according to one of the preceding claims,
**characterized in that**
a fourth robotic arm (58) having a fourth spraying tool (60) is kept ready, the fourth robotic arm (58) and the fourth spraying tool (60) in the event of a failure of one of the other robotic arms (20, 22, 32, 58) and/or spraying tools (24, 26, 34, 60) being used by the control installation (30) as the failed robotic arm (20, 22, 32, 58) and/or the failed spraying tool (24, 26, 34, 60).

10. Painting station (10) for an outer skin component (12) of a motor vehicle, having a conveying system (16) for conveying the outer skin component (12) along a conveying direction (18) through the painting station (10) which has at least two painting robots (48, 50, 52, 54) having in each case one spraying tool (24, 26, 34, 60) which is held on a robotic arm (20, 22, 32, 58) and by way of which paint is in each case able to be applied, in particular in a defined manner, to a visible region (28) of the outer skin component (12),
**characterized by**
a control installation (30) by way of which the at least two painting robots (48, 50, 52, 54) are able to be controlled in such a manner that the first spraying tool (24) of the first of the at least two painting robots (48) applies a first paint of a first color in a first sub-region (36) of the visible region (28), and the second spraying tool (26) of the second of the at least two painting robots (50) applies a second paint of a second color in a second sub-region (38) of the visible region (28), wherein in an overlap region (62) within which the first sub-region (36) overlaps the second sub-region (38) the first paint is able to be applied over the second paint and, when applying the first paint in the overlap region (62), the quantity of the first paint perpendicular to a painting direction is kept constant and/or is reduced along the painting direction, as a result of which a color gradient from the first color to the second color is formed in the overlap region (62).

11. Painting station (10) according to Claim 10,
**characterized in that**
the first robotic arm (20) and/or the second robotic arm (22) and/or a third robotic arm (32) and/or a fourth robotic arm (58) along a respective hand axis have/has an extension element (56).

12. Painting station (10) according to Claim 10 or 11,
**characterized in that**
an approach rotation angle of at least one of the spraying tools (24, 26, 34, 60) relative to the robotic arm (20, 22, 32, 58) on which the spraying tool (24, 26, 34, 60) is held is variable by the control installation (30) such that the quantity of the paint which is able to be applied to the respective associated sub-region (36, 38, 40) is able to be specified.

## Revendications

1. Procédé permettant la mise en peinture d'un élément d'enveloppe extérieure (12) d'un véhicule à moteur, selon lequel le composant d'enveloppe extérieure (12) est transporté au moyen d'une installation de transport (16) le long d'une direction de transport (18) à travers une station de mise en peinture (10), laquelle présente au moins deux robots de mise en peinture (48, 50, 52, 54), respectivement munis d'un outil de pulvérisation (24, 26, 34, 60) retenu sur un bras robotisé (20, 22, 32, 58), au moyen desquels de la peinture est respectivement appliquée sur une zone visible (28) de l'élément d'enveloppe extérieure (12),
**caractérisé en ce qu'**au moyen d'un dispositif de commande (30), lesdits au moins deux robots de mise en peinture (48, 50, 52, 54) sont commandés de telle sorte que le premier outil de pulvérisation (24) du premier desdits au moins deux robots de mise en peinture (48) applique une première peinture d'une première couleur dans une première zone partielle (36) de la zone visible (28) et que le deuxième outil de pulvérisation (26) du deuxième desdits au moins deux robots de mise en peinture (50) applique une deuxième peinture d'une deuxième couleur dans une deuxième zone partielle (38) de la zone visible (28), dans lequel, dans une zone de chevauchement (62) à l'intérieur de laquelle la première zone partielle (36) chevauche la deuxième zone partielle (38), la première peinture est appliquée sur la deuxième peinture et, lors de l'application de la première peinture dans la zone de chevauchement, la quantité de la première peinture est maintenue constante perpendiculairement à une direction de mise en peinture et/ou est réduite le long de la direction de mise en peinture, cela permettant de former un gradient de couleur de la première couleur à la deuxième couleur dans la zone de chevauchement (62).

2. Procédé selon la revendication 1,
**caractérisé en ce qu'**un troisième robot de mise en peinture (52), parmi lesdits au moins deux robots de mise en peinture (48, 50, 52, 54), qui comprend un troisième outil de pulvérisation (34) retenu sur un troisième bras robotisé (32), applique une troisième peinture d'une troisième couleur dans une troisième zone partielle (38) de la zone visible (28) .

3. Procédé selon la revendication 2,
**caractérisé en ce que**, le long de la direction de transport (18), la première zone partielle (36) est transportée avant la deuxième zone partielle (38) et/ou la deuxième zone partielle (38) est transportée avant la troisième zone partielle (40) à travers la station de mise en peinture (10) et/ou au moins une limite de la première zone partielle (36) et/ou de la deuxième zone partielle (38) et/ou de la troisième zone partielle (40) est sensiblement perpendiculaire à la direction de transport (18).

4. Procédé selon la revendication 2 ou 3, **caractérisé en ce que**, dans la première zone partielle (36), ladite au moins une limite se situe dans la première zone de chevauchement (62) qui chevauche la deuxième zone partielle (38) et/ou, dans la deuxième zone partielle (38), ladite au moins une limite se situe dans une deuxième zone de chevauchement (64) qui chevauche la troisième zone partielle (40).

5. Procédé selon l'une des revendications 2 à 4,
**caractérisé en ce que** la deuxième peinture est appliquée en premier lieu dans la deuxième zone partielle (38).

6. Procédé selon l'une des revendications 2 à 5, **caractérisé en ce que**, dans la deuxième zone de chevauchement (64), la troisième peinture est appliquée sur la deuxième peinture et/ou sur la première peinture, dans lequel, lors de l'application de la troisième peinture, sa quantité est maintenue constante perpendiculairement à la direction de transport (18) sur toute la largeur de la troisième zone partielle (40) et/ou est augmentée le long de la direction de transport (18), cela formant un gradient de couleur de la deuxième couleur et/ou de la première couleur à la troisième couleur dans la deuxième zone de chevauchement (64).

7. Procédé selon l'une des revendications 2 à 6, **caractérisé en ce que** la première couleur est une couleur métallisée ou une couleur unie et/ou la deuxième couleur est une couleur métallisée ou une couleur unie et/ou la troisième couleur est une couleur métallisée ou une couleur unie.

8. Procédé selon l'une des revendications précédentes, **caractérisé en ce que** le mouvement respectif du bras robotisé (20, 22, 32, 58) respectif et/ou de l'outil de pulvérisation (24, 26, 34, 60) respectif est synchronisé par le dispositif de commande (30) avec le mouvement de l'élément d'enveloppe extérieure (12) provoqué par l'installation de transport (16).

9. Procédé selon l'une des revendications précédentes, **caractérisé en ce qu'**il est prévu un quatrième bras robotisé (58) muni d'un quatrième outil de pulvérisation (60) qui, en cas de défaillance de l'un des autres bras robotisés (20, 22, 32, 58) et/ou outils de pulvérisation (24, 26, 34, 60), sont utilisés par le dispositif de commande (30) en tant que bras robotisé défaillant (20, 22, 32, 58) et/ou qu'outil de pulvérisation défaillant (24, 26, 34, 60) .

10. Station de mise en peinture (10) destiné à un élément d'enveloppe extérieure (12) d'un véhicule à moteur, comportant une installation de transport (16) pour transporter l'élément d'enveloppe extérieure (12) le long d'une direction de transport (18) à travers la station de mise en peinture (10), qui comprend au moins deux robots de mise en peinture (48, 50, 52, 54), respectivement munis d'un outil de pulvérisation (24, 26, 34, 60) retenu sur un bras robotisé (20, 22, 32, 58), au moyen desquels de la peinture peut être respectivement appliquée, en particulier de manière définie, sur une zone visible (28) de l'élément d'enveloppe extérieure (12),
**caractérisé par**
un dispositif de commande (30) au moyen duquel lesdits au moins deux robots de mise en peinture (48, 50, 52, 54) peuvent être commandés de telle sorte que le premier outil de pulvérisation (24) du premier desdits au moins deux robots de mise en peinture (48) applique une première peinture d'une première couleur dans une première zone partielle (36) de la zone visible (28) et que le deuxième outil de pulvérisation (26) du deuxième desdits au moins deux robots de mise en peinture (50) applique une deuxième peinture d'une deuxième couleur dans une deuxième zone partielle (38) de la zone visible (28), dans lequel, dans une zone de chevauchement (62) à l'intérieur de laquelle la première zone partielle (36) chevauche la deuxième zone partielle (38), la première peinture peut être appliquée sur la deuxième peinture et, lors de l'application de la première peinture dans la zone de chevauchement (62), la quantité de la première peinture est maintenue constante perpendiculairement à une direction de mise en peinture et/ou est réduite le long de la direction de mise en peinture, cela permettant de former un gradient de couleur de la première couleur à la deuxième couleur dans la zone de chevauchement (62) .

11. Station de mise en peinture (10) selon la revendication 10,
**caractérisée en ce que** le premier bras robotisé (20) et/ou le deuxième bras robotisé (22) et/ou un troisième bras robotisé (32) et/ou un quatrième bras robotisé (58) comprend ou comprennent un élément d'extension (56) le long d'un axe de main respectif.

12. Station de mise en peinture (10) selon la revendication 10 ou 11,
**caractérisée en ce qu'**un angle d'inclinaison d'au moins l'un des outils de pulvérisation (24, 26, 34, 60) par rapport au bras robotisé (20, 22, 32, 58) sur lequel l'outil de pulvérisation (24, 26, 34, 60) est retenu, peut être modifié par le dispositif de commande (30) de manière à pouvoir déterminer la quantité de peinture qui peut être appliquée sur la zone partielle (36, 38, 40) respectivement associée.
